# EUROPÄISCHE PATENTANMELDUNG

(11) **EP 2 293 051 A1**
(43) Veröffentlichungstag der Anmeldung: **09.03.2011**
(21) Anmeldenummer: 09011402.6
(22) Anmeldetag: 05.09.2009
(51) Int. Cl.: G01N 23/04

(54) **Verfahren und Vorrichtung zur Identifizierung von Autokatalysatoren**

(71) Anmelder: Umicore AG & Co. KG, 63457 Hanau-Wolfgang (DE)
(72) Erfinder: Hagelüken, Christian, 63457 Hanau (DE); Jongen, Liesbet, 63607 Wächtersbach (DE); Rieke, Thorsten, 63517 Rodenbach (DE); Klümper, Thomas, 65719 Hofheim im Taunus (DE)
(74) Vertreter: Starz, Karl Anton

(57) **Zusammenfassung**

Die vorliegende Erfindung betrifft ein Verfahren sowie eine Vorrichtung zur zerstörungsfreien Identifizierung von ummantelten Autokatalysatoren, die metallische und/oder keramische Trägersubstrate enthalten, die eine katalytische Beschichtung besitzen können. Das Verfahren umfasst das Durchleuchten der ummantelten Autokatalysatoren mittels Röntgeninspektion und die Identifizierung des Autokatalysators durch Abgleich der gewonnenen Daten mit einer Datensammlung, die Angaben zu industriell gefertigten Autokatalysatoren enthält. Optional kann das Verfahren weitere Untersuchungsschritte aufweisen (beispielsweise Gewichtsmessung, Messung der elektrischen und/oder magnetischen Eigenschaften oder fotographische Erfassung).

Verfahren und Vorrichtung finden Verwendung zur zerstörungsfreien, typgenauen und schnellen Erkennung bzw. Identifizierung von ummantelten Autokatalysatoren und Partikelfiltern.

## Beschreibung

Die vorliegende Erfindung betrifft ein Verfahren sowie eine Vorrichtung zur zerstörungsfreien Erkennung und Identifizierung von Autokatalysatoren, insbesondere von gebrauchten ummantelten Autoabgaskatalysatoren ("Kat-Konvertern") und Partikelfiltern. Das Verfahren kann beim Ankauf, der Sortierung und der Aufarbeitung von Autokatalysatoren verwendet werden und ermöglicht schnelle Informationen über die Materialbeschaffenheit, den Zustand und den Wert gebrauchter Altkatalysatoren bzw. Partikelfilter.

Edelmetallhaltige Katalysatoren, beispielsweise Autoabgaskatalysatoren und Abgasreinigungskatalysatoren aus industriellen Anlagen, fallen mit stark steigenden Mengen als Altmaterial an. Der größte Teil davon sind Katalysatoren aus abgemeldeten und verschrotteten Kraftfahrzeugen, die in Deutschland heute fast immer bereits mit einem Katalysator ausgestattet sind. In Westeuropa wird bis zum Jahr 2010 mit mehr als 5 Mio. Katalysatoren pro Jahr aus Altfahrzeugen gerechnet. In diesen Katalysatoren sind erhebliche Mengen der Edelmetalle Platin, Palladium und Rhodium gebunden, deren Recycling von großer ökonomischer und ökologischer Bedeutung ist.

Ein Autokatalysator besteht aus einem metallischen und/oder keramischen Trägersubstrat, dessen Oberfläche in der Regel mit einer katalytisch aktiven Beschichtung ("Washcoat") versehen ist, welche die Edelmetalle Platin (Pt), Palladium (Pd), Rhodium (Rh) und in Sonderfällen Iridium (Ir) in unterschiedlichen Kombinationen enthält. Das beschichtete keramische Trägersubstrat ("Monolith") wird mit einer Mineralfasermatte (eine sogenannte Quellmatte) und/oder einem Drahtgestrick umhüllt und in ein Stahlgehäuse eingebaut, das wiederum Teil der Abgasanlage eines Fahrzeuges ist. Bei Metallkatalysatoren ist die beschichtete Katalysatorfolie direkt mit dem Stahlmantel verlötet. Solche eingehäusten Autokatalysatoren werden in der vorliegenden Erfindung als ummantelte Altkatalysatoren bezeichnet. Zusätzlich kommen in neuerer Zeit vor allem bei Dieselfahrzeugen sogenannte Partikelfilter (insbesondere Russpartikelfilter) zum Einsatz, die in der Regel ein keramisches Trägersubstrat aufweisen, das sowohl edelmetallbeschichtet als auch unbeschichtet sein kann. In der vorliegenden Anmeldung werden unter dem Begriff "Autokatalysator" sowohl Autoabgaskatalysatoren als auch Partikelfilter, NOx-Speicherkatalysatoren sowie SCR-Katalysatoren umfasst.

In der Recyclingkette von Katalysatoren haben sich folgende Strukturen herausgebildet: Ein Autoverwerter verkauft Altkatalysatoren zu Stückpreisen (pauschal, "tel quel") an einen Aufkäufer. Der Aufkäufer kumuliert Altkatalysatoren und verkauft diese an eine Katalysatorzerlegefirma. Die Katalysatorzerlegefirma ("Entmantler") trennt mit mechanischen Verfahren, in der Regel mit hydraulischen Scheren, den edelmetallhaltigen Katalysatorträger aus dem Stahlgehäuse und sammelt die Keramik bis zu Mengen von 1000 kg oder darüber hinaus. Der Entmantler liefert die edelmetallhaltige Katalysator-Keramik an eine Edelmetallscheideanstalt, bei der eine Zerkleinerung bzw. Mahlung, Homogenisierung und repräsentative Beprobung des Materials und anschließend die stoffliche Rückgewinnung der Edelmetalle erfolgt. Auf Basis der aus der Probe analysierten Edelmetallgehalte erfolgt die Abrechnung zwischen der Entmantelungsfirma und der Edelmetallscheideanstalt.

Seit Beginn der 90er Jahre hat in Europa die Vielfalt an Katalysatortypen erheblich zugenommen; diese Katalysatoren gelangen heute und in den kommenden Jahren zunehmend in die Recyclingkreisläufe. Bei den Katalysatoren für Otto-Motoren ist das traditionelle Pt : Rh Verhältnis 5:1 mit 1,5 g/l Edelmetallinhalt abgelöst worden durch Katalysatorbeschichtungen, die neben Platin und Rhodium auch Palladium (Pd), zum Teil in dominanten Mengen enthalten. Auch Dieselfahrzeuge werden zunehmend mit Katalysatoren ausgestattet. Diese enthalten in der Regel jedoch nur Platin und Palladium. Insgesamt schwanken seitdem in Autokatalysatoren sowohl das Verhältnis von Pt, Pd und Rh zueinander als auch die Edelmetallbeladung in einer sehr großen Bandbreite. Da die Variationen der Edelmetallgehalte auch innerhalb einer Automarke auftreten, kann selbst der Fachmann durch Augenschein nicht mehr erkennen, welchen ungefähren Edelmetallinhalt der Autokatalysator hat und wie der entsprechende Ankaufspreis zu taxieren ist. Dies stellt für den Ankäufer ein erhebliches finanzielles Risiko dar. Um genauere Informationen über den aufzukaufenden Altkatalysator erhalten zu können, müsste eine Entmantelung ("Decanning") des Katalysators erfolgen. Dies ist jedoch zeitaufwendig und teuer.

Aus der WO 2006/015831 ist eine Vorrichtung zur mobilen Vorbehandlung und Analyse von edelmetallhaltigen Katalysatoren auf keramischer Basis bekannt. Diese Anlage umfasst Einrichtungen zum Zerkleinern, zum Wiegen sowie zur Analyse des zerkleinerten Keramikmaterials. Das Verfahren setzt eine Entmantelung des Katalysators voraus.

In der EP 605748B1 wird ein Verfahren und eine Vorrichtung zur Aufbereitung von Metallträger-Katalysatoren beschrieben. Verfahren zur Identifizierung von Autokatalysatoren oder zur Unterscheidung zwischen Autokatalysatoren mit metallischem und keramischem Trägersubstrat sind jedoch nicht erwähnt.

Es ist daher eine Aufgabe der vorliegenden Erfindung, ein einfaches, schnelles Verfahren bereitzustellen, das die typgenaue Erkennung und Identifizierung von gehäusten (d.h. ummantelten) Autokatalysatoren ermöglicht. Ein solches Verfahren sollte zerstörungsfrei erfolgen, d.h. ohne ein aufwendiges Entmanteln des Autokatalysators auskommen. Es sollte weiterhin einen werttreuen Zukauf und eine stofforientierte Aufarbeitung von Altkatalysatoren ermöglichen. Weiterhin ist es eine Aufgabe der vorliegenden Erfindung, eine geeignete Vorrichtung bereitzustellen, mit der das erfindungsgemäße Verfahren betrieben werden kann.

Diese Aufgabe wird durch das Verfahren und die Vorrichtung gemäß den vorliegenden Ansprüchen gelöst. Nachfolgend erfolgt eine nähere Beschreibung der Erfindung.

Die vorliegende Erfindung betrifft ein Verfahren zur zerstörungsfreien Identifizierung eines ummantelten Autokatalysators, der mindestens ein metallisches und/oder keramisches Trägersubstrat aufweist, dessen Oberfläche mit einer katalytisch aktiven Beschichtung versehen sein kann, umfassend die Schritte
- A: Durchleuchten des ummantelten Autokatalysators mittels Röntgen- inspektion und Erfassung von Daten zur Charakterisierung des Träger- substrates,
- B: Identifizierung des Autokatalysators durch Abgleich der gewonnenen Daten mit einer Datensammlung.

Die Röntgeninspektion in Schritt A erfolgt mit mindestens einem Röntgengenerator bei einer Anodenspannung im Bereich von 80 bis 250 kV, vorzugsweise im Bereich von 100 bis 180 kV. Die mittlere Verweilzeit für die Durchleuchtung liegt im Bereich von 0,5 bis 10 sec, vorzugsweise im Bereich von 1 bis 5 sec.

Die zum Datenabgleich eingesetzte Datensammlung in Schritt B umfasst vorzugsweise Informationen von bereits bekannten, industriell gefertigten Trägersubstraten und/oder Autokatalysatoren (sog. "Katalysatorbibliothek"). In einfachsten Fall verwendet man Datenlisten, die manuell ausgewertet werden. Vorzugsweise handelt es sich um eine Datenbank, die vorab gespeicherte und katalogisierte Daten von identifizierten Autokatalysatoren (z.B. Trägersubstrat, KFZ-Typ, Herstellungsjahr, KFZ-Hersteller, Teilenummern etc) enthält. Dabei erfolgt die Auswertung durch EDV.

Die in Schritt A gewonnenen Daten werden mit den vorab gespeicherten und katalogisierten Daten von bekannten, industriell gefertigten Autokatalysatorsystemen (d.h. mit einer "Katalysatorbibliothek") abgeglichen. Durch eine Zuordnung mit den Werten dieser Datenbank wird eine typgenaue Identifizierung des vorliegenden Altkatalysators möglich.

Die Oberfläche des metallischen oder keramischen Trägersubstrates besitzt in vielen Fällen eine katalytisch aktive Beschichtung, die in der Regel mindestens ein Edelmetall aus der Gruppe Pt, Pd, Rh und Ir oder Kombinationen davon enthält. Vorteilhafterweise umfassen die in Schritt A Kombinationen davon enthält. Vorteilhafterweise umfassen die in Schritt A gewonnenen Daten zur Charakterisierung des Trägersubstrates auch Angaben über Vorhandensein, Art und/oder Menge der Edelmetalle aus der Gruppe Pt, Pd, Rh und Ir. Damit wird ein zeitnaher, wertgetreuer Zukauf von ummantelten Autokatalysatoren möglich.

Sollten die aus der Röntgenprüfung (Schritt A) erhaltenen Daten eine eindeutige, zweifelsfreie Identifizierung des Autokatalysators nicht ermöglichen, so kann das erfindungsgemäße Verfahren zur Absicherung der Diagnostik erweitert werden und neben den Schritten A und B weitere (optionale) Untersuchungsschritte umfassen. Die mit solchen Untersuchungsschritten erhaltenen zusätzlichen Daten können mit den Daten der Röntgenprüfung kombiniert werden und so eine vollständige Charakterisierung/Identifizierung des untersuchten Autokatalysators ermöglichen.

Beispielsweise kann das erfindungsgemäße Verfahren als weitere Untersuchungsschritte eine Messung der elektrischen und/oder magnetischen Eigenschaften aufweisen. Durch elektrische Messungen kann beispielsweise eine Unterscheidung zwischen Metall- und Keramikträgersubstrat ermöglicht werden. Informationen über die magnetischen Eigenschaften können zur Einordnung der für das Katalysatorgehäuse verwendeten Stahlsorte herangezogen werden.

Weiterhin kann eine Gewichtsmessung integriert werden. Darüber hinaus kann das Verfahren auch eine fotographische Erfassung beinhalten, wodurch die Erkennung und Erfassung von Teilenummern etc ermöglicht wird.

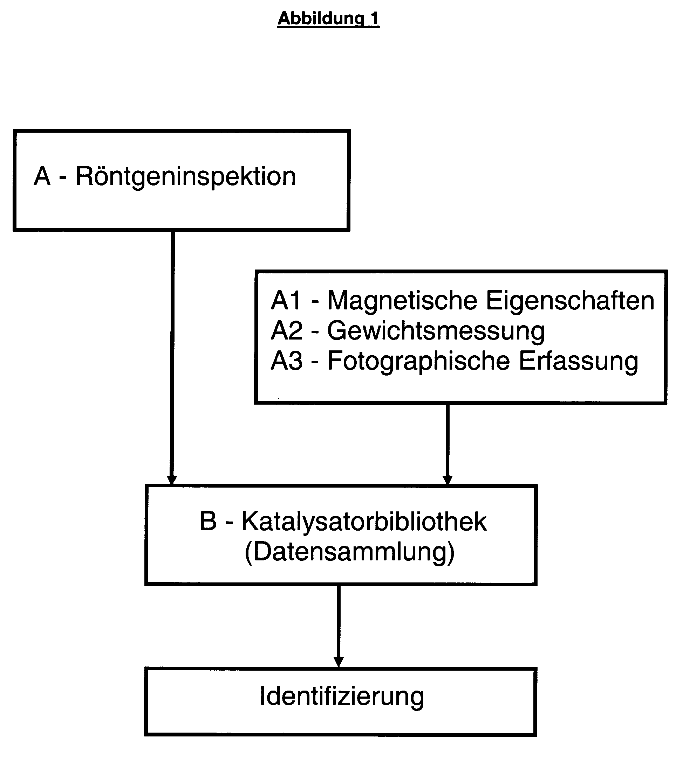

**Abbildung 1** zeigt eine schematische Darstellung einer möglichen Ausführungsform des erfindungsgemäßen Verfahrens, bei der neben der Röntgeninspektion (Schritt A) die Untersuchungsschritte Messung der magnetischen Eigenschaften (Schritt A1), Gewichtsmessung (A2) und fotografische Erfassung (Schritt A3) durchgeführt werden. In der einfachsten Ausführungsform umfasst das Verfahren jedoch nur die Schritte A und B; je nach Anwendungsfall, der gewünschter Genauigkeit und der Datenlage sind beliebige weitere Kombinationen solcher zusätzlicher Untersuchungsschritte möglich. Die zusätzlichen Untersuchungsschritte A1 - AX können parallel oder nacheinander (d.h. sequentiell) durchgeführt werden; die daraus erhaltenen Ergebnisse bzw. Daten werden in Schritt B mit der Datensammlung (Katalysatorbibliothek) zusammengeführt, kombiniert und ausgewertet um letztlich eine möglichst typgenaue Identifizierung des Autokatalysators zu erhalten und ggf. Fälschungen zu erkennen. Optional können weitere Untersuchungsschritte in das erfindungsgemäße Verfahren integriert werden, wenn sie zur genaueren Identifizierung des zu untersuchenden Autokatalysators notwendig sind.

Röntgendurchstrahlungsgeräte bzw. Röntgenprüfgeräte sind aus der zerstörungsfreien Werkstoffprüfung, der Produktinspektion sowie aus der Sicherheitskontrolle auf Flughäfen bekannt. Die Methode der Röntgeninspektion basiert prinzipiell auf der Absorption von Röntgenstrahlung durch die Materie. Bei diesem Verfahren strahlt eine Röntgenquelle durch einen Prüfkörper. Je nach Dichte und Dicke des Materials wird die Strahlung dabei mehr oder weniger geschwächt und auf der Gegenseite mit einem Röntgensensor in ein entsprechendes Grauwertbild umgewandelt. Man erhält eine bildliche Darstellung, da verschiedene Materialien ein unterschiedliches Absorptionsverhalten zeigen. Wenn bei einem gegebenen Material Konzentrationsunterschiede vorliegen, so lässt sich dies anhand einer bildlichen Darstellung erkennen. Je mehr Röntgenstrahlung absorbiert wird, desto dunkler wird das Bild. Mit der Wiederholung des Vorgangs aus verschiedenen Winkeln kann auch eine dreidimensionale Rekonstruktion des Objekts durchgeführt werden (3D-imaging).

Der Einsatz der Röntgeninspektion zur Untersuchung von ummantelten Altkatalysatoren wurde bisher noch nicht beschrieben. Die Absorption von Röntgenstrahlung ist element- und konzentrationsabhängig, so dass die Röntgenstrahlung von schwereren Elementen stärker absorbiert wird. Beispielsweise absorbiert Platin mehr Röntgenstrahlung als Palladium; die Methode erlaubt also eine qualitative Unterscheidung dieser beiden Edelmetalle. Je höher die Konzentration eines Metalls bzw. Edelmetalls ist, desto höher ist die Röntgenabsorption. Dadurch lassen sich beispielsweise Gradienten in der Edelmetallbeschichtung eines Trägersubstrates erkennen.

Es hat sich gezeigt, dass es mit geeigneten Röntgeninspektionsgeräten möglich ist, die Trägersubstrate (keramische Monolithe und/oder metallische Träger) im Inneren eines ummantelten Autokatalysators genau zu charakterisieren. Damit können Daten über Zustand, Form, Abmessungen, Aufbau und Beschichtung dieser Trägersubstrate gewonnen werden, ohne dass vorher eine Entmantelung durchgeführt werden muss.

Weiterhin ist es möglich, mit Hilfe der Röntgeninspektion eine qualitative Elementerkennung durchzuführen. Mit Hilfe spezieller Röntgendetektoren, die auf das Absorptionsspektrum eines speziellen Elementes (beispielsweise Pt) zugeschnitten sind, lässt sich eine Aussage über die jeweilige Edelmetallzusammensetzung eines Autokatalysators vornehmen. Im vorliegenden Fall bedeutet dies, dass eine qualitative Erkennung der in der Katalysatorbeschichtung vorhandenen Edelmetalle Platin, Rhodium und Palladium durchgeführt werden kann. Insbesondere die An- oder Abwesenheit von Rhodium stellt eine wichtige Information zur preislichen Bewertung eines Autokatalysators dar. Das Röntgenprüfgerät kann für das erfindungsgemäße Verfahren optional mit Röntgendetektoren und ggf. Filter für die Edelmetalle Pt, Rh und Pd ausgerüstet werden.

Die eingesetzte Röntgenstrahlung wird in der Regel auf elektrischem Wege erzeugt und kann jederzeit abgeschaltet werden. Aus Gründen des Strahlenschutzes arbeiten die Röntgeninspektionsgeräte häufig mit einer begrenzten Strahlebene. Dabei wird der Nutzstrahl des Röntgensystems mittels eines Kollimators zu einem nur wenige Millimeter breiten Fächerstrahl gebündelt, der von unten das auf einem Förderband platzierte Prüfgut durchdringt. Auf der Gegenseite sind Detektordioden angebracht, die den gefächerten Röntgenstrahl energetisch erfassen und die über eine einen PC schnell sequentiell gescannt werden. Dabei wird ein Rasterbild erstellt, das über eine Bildverarbeitungs-Software weiter analysiert und verfeinert werden kann. Für die Analyse und Auswertung des Röntgenbildes stehen verschiedene Werkzeuge und Optionen zur Verfügung. In der Regel ist eine automatische Detektions-Software (imaging software) erhältlich, mit der die Bildauswertung optimiert werden kann. Die Bilddarstellung erfolgt vorzugsweise über einen Monitor.

Damit die Durchstrahlung von Autokatalysatoren in den metallischen Gehäusen ermöglicht wird, sollte der Röntgengenerator des Gerätes eine Anodenspannung im Bereich von 80 bis 250 kV, vorzugsweise im Bereich von 100 bis 180 kV aufweisen. Damit wird eine Durchdringung gewährleistet, die hoch genug ist, um auch Autokatalysatoren mit dicker Ummantelung, insbesondere solche mit dickem Stahlmantel oder Gussmantel zu untersuchen. Darüber hinaus muss der Röntgenstrahl auch die Quellmatte durchdringen. Durch den Einsatz spezieller Bildanalyseverfahren, wird es weiterhin möglich, eventuell auftretende dunkle Bereiche des Röntgenbildes entsprechend aufzuhellen um zusätzliche Informationen zu erhalten.

Typische Werte für den Anodenstrom liegen im Bereich von 0.1 bis 1 mA. Die im Verfahren verwendete Röntgenstrahlung ist in der Regel nicht ausreichend um die durchleuchteten Objekte zu aktivieren und so zu kontaminieren.

Zur Durchführung des erfindungsgemäßen Verfahrens wird der zu prüfende ummantelte Autokatalysator auf das Förderband des Röntgenprüfgerätes gelegt, passiert den Röntgenstrahl in einem Prüftunnel und wird nach der Durchleuchtung vom Band abgenommen. Der Prüftunnel des für das Verfahren geeigneten Röntgenprüfgerätes sollte Abmessungen im Bereich von etwa 100 cm x 70 cm, vorzugsweise 80 x 60 cm besitzen, sodass hinreichend große Objekte (ggf. mit Flanschen und Krümmern) durchstrahlt werden können. Typische Betriebstemperaturen liegen im Bereich von 10 bis 50°C. Die mittlere Verweilzeit für die Durchstrahlung eines Autokatalysators liegt je nach Größe im Bereich von 0,5 bis 10 sec, vorzugsweise im Bereich von 1 bis 5 sec. Die Verweilzeit ist durch eine Regelung der Bandgeschwindigkeit des Förderbandes stufenlos einstellbar. Die Bandgeschwindigkeiten liegen typischerweise im Bereich von 0,05 bis 1 m/s.

Geeignete Röntgeninspektionsgeräte sind kommerziell erhältlich. Ein geeignetes Röntgenprüfgerät ist beispielsweise das HI-SCAN 150 MPI-700 (Fa. Smiths-Heimann, Wiesbaden). Jedoch sind auch andere Geräte hierfür geeignet.

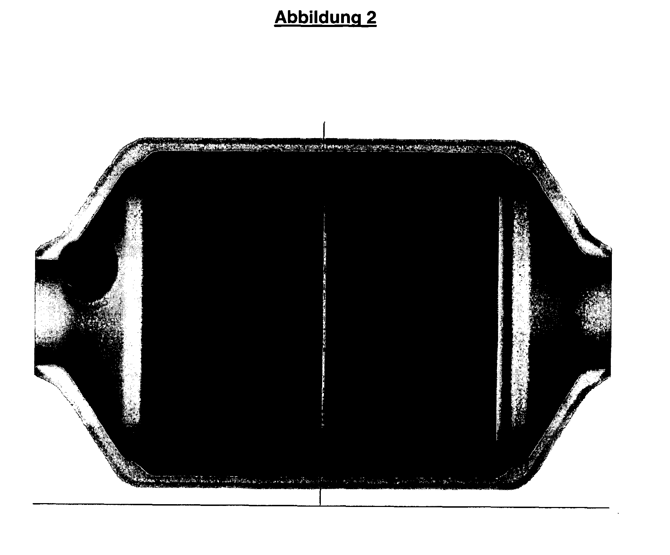

Eine Röntgenaufnahme eines untersuchten Autokatalysators ist in **Abbildung 2** exemplarisch gezeigt. Durch die Röntgenprüfung können beispielsweise die folgenden Informationen zur Charakterisierung des Autokatalysators gewonnen werden:
a) Abmessungen bzw. Dimensionen des Trägersubstrates: Aus den Abmessungen lässt sich das betreffende Katalysatorvolumen und -gewicht errechnen sowie Angaben über den Edelmetallinhalt abschätzen. Außerdem wird eine Eingrenzung des Typs ermöglicht.
b) Zustand des Trägersubstrates: beschädigte, zerstörte oder gefälschte/manipulierte monolithische Katalysatorträger sind leicht zu erkennen und können aussortiert werden.
c) Gegenwart von Metallen, insbesondere Edelmetallen in der katalytischen Beschichtung: Füllgrad und Zustand der Edelmetallbeschichtung, Vorhandensein von Pt, Pd und/oder Rh.
d) Art des verwendeten Trägersubstrates: Keramik (Cordierit, Siliziumcarbid), Metall etc.; Zelldichte, Beschichtungsart, Aufbau usw.
e) Katalysatorart: Partikelfilter / Dreiwegekatalysator / Dieselkatalysator / NOx-Speicherkatalysator / SCR-Katalysator etc.

Die mit Röntgeninspektion (Schritt A) und ggf. durch weitere zusätzliche Untersuchungsschritte (Schritte A1 - AX) gewonnenen Daten werden im erfindungsgemäßen Verfahren in Schritt B mit einer Datensammlung ("Katalysatorbibliothek") kombiniert, manuell oder elektronisch ausgewertet und abgeglichen. Die Katalysatorbibliothek enthält beispielsweise Informationen über Abmessungen, Form und Besonderheiten von bekannten, industriell gefertigten beschichteten Trägersubstraten und/oder Autokatalysatoren. Durch diesen Abgleich kann eine typgenaue Identifizierung des Autokatalysators erfolgen. Damit werden Informationen erhalten, die einen werttreuen Zukauf und/oder eine stofforientierte Aufarbeitung des Autokatalysators ermöglichen.

Die in der Katalysatorbibliothek gespeicherten Daten beziehen sich in der Regel auf den Frischzustand bzw. Einbauzustand eines beschichteten Monolithen. Alterungseffekte können berücksichtigt werden; die Daten ermöglichen dann beim Abgleich eine Aussage zum Alterungszustand des Prüflings. Damit kann das Verfahren auch zur Untersuchung und Diagnostik von KFZ-Katalysatoranlagen herangezogen werden.

Ein weiterer großer Vorteil des erfindungsgemäßen Verfahrens ist das Erkennen von Katalysatorfälschungen, die seit einiger Zeit gehäuft im Markt anzutreffen sind. Hierbei handelt es sich um unbeschichtete oder manipulierte ummantelte Katalysatoren, die in betrügerischer Absicht in den Recyclingmarkt geschleust werden.

Weitere Ausgestaltungen des Verfahrens sind möglich. Wie bereits beschrieben, kann das erfindungsgemäße Verfahren weiterhin Verfahren zur Gewichtsmessung, Verfahren zur Messung der elektrischen und/oder magnetischen Eigenschaften sowie fotographische Verfahren beinhalten. Diese zusätzlichen Verfahren können in sequentieller oder paralleler Form zur Röntgeninspektion eingesetzt werden und dienen dazu, die vorliegenden Informationen weiter zu stützen, zu verfeinern und abzusichern.

Das erfindungsgemäße Verfahren kann sowohl diskontinuierlich als auch kontinuierlich betrieben werden und eignet sich für den stationären wie auch für den mobilen Einsatz. Darüber hinaus kann das Verfahren separat betrieben oder in eine bestehende Produktionslinie (beispielsweise in eine Recyclinganlage) integriert werden.

Weiterhin ist eine Vorrichtung zur Identifizierung von Autokatalysatoren Gegenstand der vorliegenden Erfindung.

Die Erfindung umfasst eine Vorrichtung zur zerstörungsfreien Identifizierung von ummantelten Autokatalysatoren, die mindestens ein metallisches und/oder keramisches Trägersubstrat enthalten, dessen Oberfläche mit einer katalytisch aktiven Beschichtung versehen sein kann, aufweisend
a) eine Einrichtung zum Durchleuchten des Autokatalysators mittels Röntgeninspektion,
b) mindestens eine Einrichtung zum Abgleich der gewonnenen Daten mit einer Datensammlung.

Die Einrichtung zum Durchleuchten des Autokatalysators (Röntgenprüfgerät) weist einen Röntgengenerator auf, der bei einer Anodenspannung im Bereich von 80 bis 250 kV, vorzugsweise im Bereich von 100 bis 180 kV betrieben wird.

Die Vorrichtung kann weiterhin Einrichtungen zur Gewichtsmessung, zur Messung der elektrischen Eigenschaften, zur Messung der magnetischen Eigenschaften oder zur fotographischen Erfassung umfassen. Dabei sind die unterschiedlichsten Kombinationen dieser zusätzlichen Einrichtungen möglich.

In der ersten Einrichtung erfolgt das Durchleuchten von ummantelten Autokatalysatoren mittels Röntgeninspektion. In einer zweiten Einrichtung (z.B. eine elektronische Auswerteeinheit) werden die aus der Röntgeninspektion ermittelten Daten mit den vorab gespeicherten bzw. katalogisierten Daten von bekannten, industriell gefertigten Autokatalysatorsystemen (Datensammlung/"Katalysatorbibliothek") verglichen. Durch eine Zuordnung mit den Werten dieser Datensammlung gelingt in der Regel eine typgenaue Identifizierung des Autokatalysators.

Gemäß den weiteren Ausführungsformen des erfindungsgemäßen Verfahrens kann die dazu geeignete Vorrichtung neben den Einrichtungen a) und b) weitere Einrichtungen bzw. Module für verschiedene Untersuchungsverfahren umfassen: diese sind beispielsweise Einrichtungen zur Gewichtsmessung (z.B. Waagen), zur Messung der elektrischen und/oder magnetischen Eigenschaften sowie zur fotographischen Erfassung. Weitere Einrichtungen sind möglich, wenn sie zur genaueren Identifizierung des zu untersuchenden Autokatalysators benötigt werden.

Die erfindungsgemäße Vorrichtung kann modular aufgebaut sein; sie kann sowohl diskontinuierlich als auch kontinuierlich betrieben werden und eignet sich für den stationären wie auch mobilen Einsatz.

Verfahren und Vorrichtung können zum Ankauf und/oder zur Sortierung von Autokatalysatoren, insbesondere gebrauchten Autokatalysatoren verwendet werden.

Die nachfolgenden Beispiele sollen die Erfindung näher erläutern, ohne jedoch ihren Schutzbereich einzuschränken.

### Beispiel 1

Ein stahlummantelter Autokatalysator unbekannter Herkunft wird mit dem Röntgeninspektionsgerät HI-SCAN 150 MPI-700 (Fa. Smiths-Heimann, Wiesbaden) untersucht. Folgende Geräteparameter wurden eingestellt:

| | |
|---|---|
| Anodenspannung: | 110 kV |
| Anodenstrom: | 0.5 mA |
| Bandgeschwindigkeit: | 0,25 m/s |

Die Auswertung der Röntgeninspektion ergibt Informationen u. a. über das Trägersubstrat (hier: Keramik, Typ Cordierit), über die Form und die Abmessungen des Trägersubstrates (hier: zylindrische Form mit best. Durchmesser und Länge) und über die vorhandenen Edelmetalle (hier: Pt, Pd und Rh in best. Anteilen vorhanden). Die erhaltenen Daten werden elektronisch mit einer Katalysatordatenbank (Katalysatorbibliothek) abgeglichen, die Informationen über kommerziell eingesetzte beschichtete Trägersubstrate und Autokatalysatoren enthält. Damit wird eine Identifizierung des Autokatalysators ermöglicht. Nach wertgetreuem Ankauf des Katalysators wird er anschließend einem geeigneten Recyclingverfahren zugeführt.

### Beispiel 2

Ein stahlummantelter Autokatalysator unbekannter Herkunft wird mit dem Röntgeninspektionsgerät HI-SCAN 150 MPI-700 (Fa. Smiths-Heimann, Wiesbaden) untersucht. Die Geräteparameter werden entsprechend Beispiel 1 eingestellt. Zusätzlich wird eine elektrische Induktionsmessung vorgenommen. Die Auswertung der Röntgeninspektion und der elektrischen Induktionsmessung ergibt Informationen u. a. über das Trägersubstrat (hier: Metall), über die Trägerform (hier: zylindrisch mit best. Abmessungen) und über die vorhandenen Edelmetalle (hier: Pt und Pd in best. Anteilen vorhanden). Die gewonnenen Daten werden elektronisch mit einer Katalysatordatenbank (Katalysatorbibliothek) abgeglichen, die Informationen über kommerziell eingesetzte Autokatalysatoren enthält. Es wird eine Identifizierung des Katalysators durchgeführt. Nach wertgetreuem Ankauf des Katalysators wird er anschließend einem für Metallträger geeigneten Recyclingverfahren zugeführt.

### Beispiel 3

Ein ummantelter Autokatalysator unbekannter Herkunft wird mit dem Röntgeninspektionsgerät HI-SCAN 150 MPI-700 (Fa. Smiths-Heimann, Wiesbaden) untersucht. Die Geräteparameter werden entsprechend Beispiel 1 eingestellt. Die Auswertung der Röntgeninspektion ergibt Informationen u. a. über das Trägersubstrat (hier: Keramik, Silziumcarbid), über die Trägerform (hier: zylindrische Form) und über das Vorhandensein von Edelmetallen (hier: Edelmetalle nicht vorhanden). Die gewonnenen Daten werden elektronisch mit einer Katalysatordatenbank (Katalysatorbibliothek) abgeglichen, die Informationen über kommerziell eingesetzte Autokatalysatoren enthält. Es handelt sich um einen edelmetallfreien Russpartikelfilter. Nach wertgetreuem Ankauf wird er einem geeigneten Recyclingverfahren zugeführt.

## Patentansprüche

1. Verfahren zur zerstörungsfreien Identifizierung eines ummantelten Autokatalysators, der mindestens ein metallisches und/oder keramisches Trägersubstrat aufweist, dessen Oberfläche mit einer katalytisch aktiven Beschichtung versehen sein kann, umfassend die Schritte
A Durchleuchten des ummantelten Autokatalysators mittels Röntgeninspektion und Erfassung von Daten zur Charakterisierung des Trägersubstrates,
B Identifizierung des Autokatalysators durch Abgleich der gewonnenen Daten mit einer Datensammlung.

2. Verfahren nach Anspruch 1, wobei die Röntgeninspektion in Schritt A mit einem Röntgengenerator bei einer Anodenspannung im Bereich von 80 bis 250 kV, vorzugsweise im Bereich von 100 bis 180 kV erfolgt.

3. Verfahren nach Anspruch 1 oder 2, wobei die mittlere Verweilzeit für die Durchleuchtung in Schritt A im Bereich von 0,5 bis 10 sec liegt.

4. Verfahren nach einem der Ansprüche 1 bis 3, wobei die Datensammlung in Schritt B Daten von bekannten, industriell gefertigten Trägersubstraten und/oder Autokatalysatoren enthält ("Katalysatorbibliothek") und der Abgleich durch EDV erfolgt.

5. Verfahren nach einem der Ansprüche 1 bis 4, wobei die Oberfläche des metallischen oder keramischen Trägersubstrates eine katalytisch aktive Beschichtung aufweist, die mindestens ein Edelmetall aus der Gruppe Pt, Pd, Rh und Ir oder Kombinationen davon enthält.

6. Verfahren nach einem der Ansprüche 1 bis 5, wobei die in Schritt A gewonnenen Daten zur Charakterisierung des Trägersubstrates Angaben über Gegenwart, Art und/oder Menge der Edelmetalle aus der Gruppe Pt, Pd, Rh und Ir umfassen.

7. Verfahren nach einem der Ansprüche 1 bis 6, weiterhin umfassend einen Verfahrensschritt zur Messung der elektrischen Eigenschaften.

8. Verfahren nach einem der Ansprüche 1 bis 7, weiterhin umfassend einen Verfahrensschritt zur Messung der magnetischen Eigenschaften.

9. Verfahren nach einem der Ansprüche 1 bis 8, weiterhin umfassend einen Verfahrensschritt zur Gewichtsmessung.

10. Verfahren nach einem der Ansprüche 1 bis 9, weiterhin umfassend einen Verfahrensschritt zur fotographischen Erfassung.

11. Verfahren nach einem der Ansprüche 1 bis 10, wobei der ummantelte Autokatalysator ein Autoabgaskatalysator oder ein Partikelfilter ist.

12. Verfahren nach einem der Ansprüche 1 bis 11, wobei das Verfahren kontinuierlich betrieben wird und ggf. in eine Recyclinganlage integriert ist.

13. Vorrichtung zur zerstörungsfreien Identifizierung von ummantelten Autokatalysatoren, die mindestens ein metallisches und/oder keramisches Trägersubstrat enthalten, dessen Oberfläche mit einer katalytisch aktiven Beschichtung versehen sein kann, aufweisend
a) eine Einrichtung zum Durchleuchten des Autokatalysators mittels Röntgeninspektion,
b) mindestens eine Einrichtung zum Abgleich der gewonnenen Daten mit einer Datensammlung.

14. Vorrichtung gemäß Anspruch 13, weiterhin umfassend Einrichtungen zur Gewichtsmessung, und/oder zur Messung der elektrischen Eigenschaften und/oder zur Messung der magnetischen Eigenschaften und/oder zur fotographischen Erfassung.

15. Vorrichtung gemäß Anspruch 13 oder 14, wobei die Einrichtung zum Durchleuchten des Autokatalysators einen Röntgengenerator aufweist, der bei einer Anodenspannung im Bereich von 80 bis 250 kV, vorzugsweise im Bereich von 100 bis 180 kV betrieben wird.

16. Verwendung des Verfahrens gemäß einem der Ansprüche 1 bis 12 zum Ankauf und/oder zur Sortierung von Autokatalysatoren.
